# EUROPEAN PATENT APPLICATION

(11) **EP 4 130 077 A1**
(43) Date of publication of application: **08.02.2023**
(21) Application number: 21190165.7
(22) Date of filing: 06.08.2021
(51) Int. Cl.: C08F 293/00, C08F 220/06, C08F 220/70

(54) **SYMMETRIC RAFT AGENT FOR CONTROLLED RADICAL POLYMERIZATION OF MULTI-BLOCK COPOLYMERS FOR MONOMERS WITH DIFFERENT ACTIVITIES**

(71) Applicant: Clariant International Ltd, 4132 Muttenz (CH); Max-Planck-Gesellschaft zur Förderung der Wissenschaften e.V., 80539 München (DE)
(72) Inventor: PETROZZIELLO, Lena, 63505 Langenselbold (DE); KAYSER, Christoph, 55127 Mainz (DE); HÄUßLER, Matthias, 65239 Hochheim am Main (DE); KLAPPER, Markus, 55128 Mainz (DE)
(74) Representative: Kampen, Daniela

(57) **Abstract**

Symmetric RAFT agent for controlled radical polymerization of multi-block co-polymers for monomers with different activities

The present invention is directed at a method for the preparation of a multi-block co-polymer by reversible addition-fragmentation chain transfer (RAFT) polymerization of ethylenically unsaturated monomers with different activities in the presence of a chain transfer agent (CTA), wherein the innermost block of the multi-block copolymer is obtained from ethylenically unsaturated monomers having the highest reactivity toward radical addition within the multi-block copolymer. The invention is also directed at said chain transfer agent, the use thereof for preparing said multi-block copolymer, said multiblock copolymer, a process for the preparation of the chain transfer agent, and the use of said multiblock copolymer as an emulsifying or dispersing agent.

## Description

The present invention is directed at a method for the preparation of a multi-block co-polymer by reversible addition-fragmentation chain transfer (RAFT) polymerization of ethylenically unsaturated monomers with different activities in the presence of a chain transfer agent (CTA), wherein the innermost block of the multi-block copolymer is obtained from ethylenically unsaturated monomers having the highest reactivity toward radical addition within the multi-block copolymer. The invention is also directed at said chain transfer agent, a process for the preparation of the chain transfer agent, the use of the chain transfer agent for preparing a multi-block copolymer, the multiblock copolymer, and the use of said multiblock copolymer as an emulsifying or dispersing agent or as a rheology modifying agent.

The reversible addition-fragmentation chain transfer (RAFT) polymerization process is an important technique in the field of radical-initiated olefin polymerization, which often allows good control of molecular weight (Mw), polydispersity (Mw/Mn) and other polymer properties.

A typical RAFT polymerization process requires the presence of a radical initiator, a chain transfer agent (CTA), also referred to as RAFT agent, and the ethylenically unsaturated monomers to be polymerized. Both homo-polymerizations and co-polymerizations of different types of ethylenically unsaturated monomers can be accomplished by the method of RAFT polymerizations. A short review on the topic of RAFT polymerizations and the possibilities enabled thereby is presented in "50th Anniversary Perspective: RAFT polymerization - A User Guide" (Sébastien Perrier, Macromolecules 2017, 50, pp. 7433-7447; In the following referred to as "RAFT User Guide"). The review summarizes the relevant principles and mechanisms behind the RAFT polymerization process, which also apply to the present invention.

Typical RAFT agents (CTAs) are derived from thiocarbonylthio compounds having a general formula (A1) 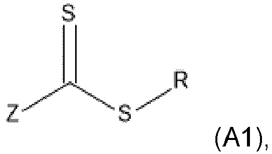 wherein
- Z: represents an activating group, which can be varied to control the reactivity of the C=S double bond toward radical addition, and
- R: is a leaving group capable of forming a radical through homolytic cleavage of the S-R bond.

During a RAFT polymerization process, the polymer chain growth takes place by insertion of ethylenically unsaturated monomers between an S atom of the CTA and the R group or polymer chain attached to said S atom.

Monomers that can be polymerized in RAFT polymerization processes are ethylenically unsaturated monomers and are usually classified into two groups. The first class of so-called "more activated monomers" (MAMs) typically have their vinyl group conjugated to an unsaturated moiety, such as a C=C double bond e.g. in butadiene, isoprene, a C=O carbonyl double bond, e.g. in (meth)acrylates, (meth)acrylamides, maleic anhydride, maleimide, an aromatic ring, e.g. in styrene, or nitrile groups, e.g. in acrylonitrile. Without being bound by theory, it is assumed that in order to render an ethylenically unsaturated monomer suitable as a MAM, the C=C double bond may be conjugated to or positioned next to a moiety capable of applying a mesomeric -M effect on the C=C double bond. The second class of so-called "less activated monomers" (LAMs) typically contain a C=C double bond that is not conjugated with an unsaturated moiety, and is often adjacent to heteroatoms having a lone electron pair, such as, but not limited to, oxygen, nitrogen, sulfur atoms, or saturated hydrocarbon moieties. Without being bound by theory, it is assumed that in order to render an ethylenically unsaturated monomer suitable as a LAM, the C=C double bond may not be conjugated to or positioned next to a moiety that is capable of applying a mesomeric -M effect on the C=C double bond. For example, the C=C double bond may be conjugated to or positioned next to any electron donating group, such as any moiety capable of applying a mesomeric +M effect on the C=C double bond, or even an inductive +I effect on the C=C double bond, if no mesomeric -M effects are present.

For a successful RAFT polymerization, it is often important to select the groups Z and R of the CTA in such a way that the C=S double bond of the CTA is more reactive to radical addition than the C=C bond of the polymerized ethylenically unsaturated monomer, and at the same time in such a way that the group R is a leaving group capable of forming a radical by homolytic cleavage of the R-S bond, wherein the radical thus formed is reactive toward the C=C double bond of the ethylenically unsaturated monomer to be polymerized in terms of radical addition.

For control of RAFT polymerizations of MAMs, it is often required to select a group Z, which stabilizes the radical formed from radical addition to the C=S bond, thus that this addition is favored. Without being bound by theory, it may be assumed that the C=S double bond may be conjugated to or positioned next to an electron withdrawing group, such as any moiety capable of applying a mesomeric -M effect on the C=S double bond, or even an inductive -I effect on the C=S double bond, if no mesomeric effects are present, in order to perform a RAFT polymerization of MAMs.

In contrast, for control of RAFT polymerizations of LAMs, it is often required to select a group Z which destabilizes the radical formed from radical addition to the C=S bond, thus that the fragmentation of the propagating radical is favored. Without being bound by theory, it may be assumed that the C=S double bond may be conjugated to or positioned next to an electron donating group, such as any moiety capable of applying a mesomeric +M effect on the C=S double bond, or even an inductive +I effect on the C=S double bond, if no mesomeric effects are present, in order to perform a RAFT polymerization of LAMs.

Certain CTAs are capable of polymerizing both MAMs and LAMs. Therefore, copolymerizations of MAMs and LAMs are also enabled by the RAFT process. Copolymerizations of MAMs and LAMs are described, e.g. in US2018/0141912A1.

For details on the selection of suitable Z and R groups of the CTAs of formula (A1) for the RAFT polymerization of various MAMs and LAMs and for copolymerization thereof, reference is made to "RAFT Agent Design and Synthesis" (Daniel J. Keddie et al., Macromolecules 2012, 45, pp. 5321-5342), the RAFT User Guide and the literature cited therein.

An important aspect of RAFT polymerizations is their suitability for forming block copolymers from different ethylenically unsaturated monomers with different reactivities toward radical additions. For example, block copolymerizations of MAMs and LAMs to form P(MAM-*b*-LAM) copolymers are enabled by the RAFT process. US 2018/0141912 A1 describes a RAFT polymerization process using a CTA of formula (A1), wherein homopolymerizations, copolymerizations and block copolymerizations of different MAMs, such as acrylates, methacrylates, acrylamides, maleic anhydride and styrene amongst each other or with LAMs, such as vinyl acetate, are disclosed.

However, the controlled preparation of multi-block copolymers, i.e. block copolymers containing more than two polymeric blocks of different activity, e.g. P(LAM-*b*-MAM-*b*-LAM) or P(MAM-*b*-LAM-*b*-MAM), is not disclosed.

Although in general it is possible to prepare multi-block copolymers by RAFT polymerization with CTAs of formula (A1), one-pot polymerization of multi-block copolymers turns out to be difficult, since the order of monomer addition is essential for good control over the block copolymer synthesis, and MAMs have to be polymerized before LAMs (cf. RAFT User Guide and the literature cited therein).

A possibility for preparing P(MAM-*b*-LAM-*b*-MAM) triblock copolymers by one-pot polymerization is the use of symmetric RAFT CTAs having a trithiocarbonate structure, i.e. where in structure (A1), the Z group is e.g. an S-R group, as depicted in formula (A2), as described, e.g. in EP 2 851 377.

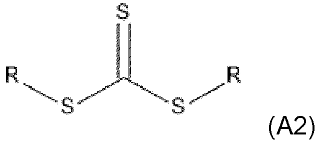

However, due to the essential order of monomer addition, wherein MAMs have to be polymerized before LAMs, only P(MAM-*b*-LAM-*b*-MAM) triblock copolymers are typically obtainable with CTAs of formula (A2). One-pot RAFT polymerizations of P(LAM-*b*-MAM-*b*-LAM) triblock copolymers with CTAs of formula (A2) are not available.

A method of preparing block copolymers, wherein one block is derived from polydimethylsiloxane and one block is obtainable by RAFT polymerization of ethylenically unsaturated monomers, is disclosed in US2004/0121938A1. The polydimethylsiloxane polymer is introduced into the CTA by linking the CTA to the polydimethylsiloxane through a diisocyanate linker. Ethylenically unsaturated monomers are then polymerized by a RAFT process. Symmetric copolymers with the polydimethylsiloxane polymer block as the inner polymer block and the polymer derived from the ethylenically unsaturated monomer as the outer polymer blocks can also be prepared. However, copolymers containing several polymer blocks derived from MAMs and LAMs, wherein the inner polymer blocks are obtained from MAMs and the outer polymer blocks are obtained from LAMs, are not taught.

The object of the present invention is therefore to provide a method for the one-pot preparation of a multi-block copolymer by reversible addition-fragmentation chain transfer (RAFT) polymerization of MAMs and LAMs, wherein the inner polymer blocks are obtained from MAMs and the outer polymer blocks are obtained from LAMs, such as in a P(LAM-*b*-MAM-*b*-LAM) triblock copolymer.

An aspect of the present invention is therefore a method for the preparation of a multi-block copolymer by reversible addition-fragmentation chain transfer (RAFT) polymerization of at least one ethylenically unsaturated monomer (M₁) selected from MAMs, and at least one ethylenically unsaturated monomer (M₂), selected from LAMs and MAMs other than (M₁), preferably LAMs the method comprising the steps of:
I) providing at least one ethylenically unsaturated monomer (M₁) selected from MAMs and at least one ethylenically unsaturated monomer (M₂) selected from LAMs and MAMs other than (M₁), preferably LAMs;
II) providing a chain transfer agent (CTA) having a structure of formula (I) 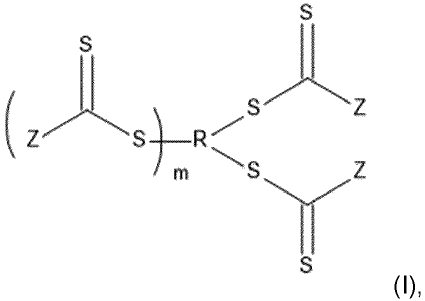 wherein
   - Z: is an activating group, which is selected such that the CTA is suited for RAFT polymerization of both MAMs and LAMs;
   - R: is an (m+2)-valent leaving group capable of forming a radical by homolytic cleavage of any of the R-S bonds, wherein the radical thus formed is reactive toward the C=C double bond of the at least one ethylenically unsaturated monomer (M₁) in terms of radical addition;
   - m: is an integer equal to or greater than 0;
III) RAFT polymerization of the at least one ethylenically unsaturated monomer (M₁), in the presence of the chain transfer agent (CTA) and a radical initiator, and in the absence of the at least one ethylenically unsaturated monomer (M₂), until the at least one ethylenically unsaturated monomer (M₁) is at least partially consumed, preferably consumed in an amount of 10 to 99 mol-%, more preferably in an amount of 40 to 98 mol-%, more preferably in an amount of 50 to 95 mol-%, more preferably in an amount of 70 to 90 mol-% of the total amount of ethylenically unsaturated monomer (M₁), thereby forming a polymer (P₁) having a structure of formula (I₁) 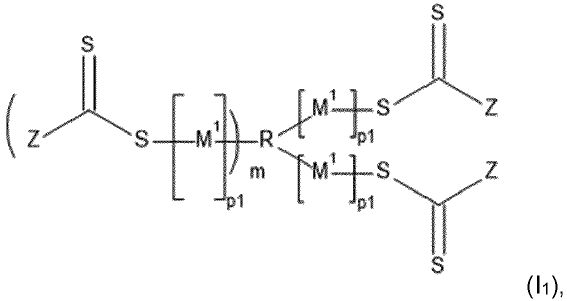 wherein
   - M¹: is the repeating unit obtained from radical RAFT polymerization of the at least one ethylenically unsaturated monomer (M₁);
   - each p1: independently is a number from 1 to 500;
   - Z, R and m: are the same as in formula (I), and
   wherein if two or more ethylenically unsaturated monomers (M₁) are provided in step I) the ethylenically unsaturated monomers (M₁) are polymerized together or separately, and in any order, and the repeating units M¹ derived from different ethylenically unsaturated monomers (M₁) may be arranged statistically or in blocks;
IV) RAFT polymerization of the at least one ethylenically unsaturated monomer (M₂) in the presence of the polymer (P₁) formed in step III), and optionally in the presence of more radical initiator, until the at least one ethylenically unsaturated monomer (M₂) is at least partially consumed, preferably consumed in an amount of 5 to 99 mol-%, more preferably in an amount of 10 to 98 mol-%, more preferably in an amount of 15 to 95 mol-%, more preferably in an amount of 20 to 90 mol-% of the total amount of ethylenically unsaturated monomer (M₂), e.g. in an amount of 50 to 90 mol-% or 70 to 90 mol-%, thereby forming a multi-block copolymer (P₂) having a structure of formula (I₂) 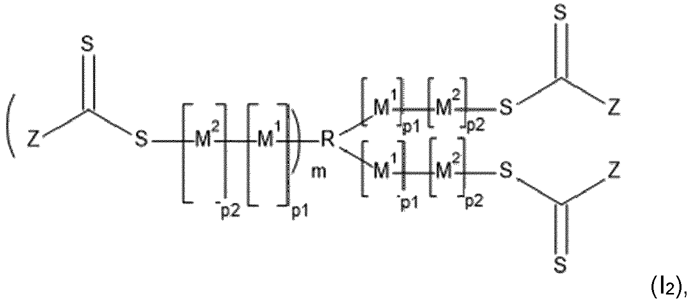 wherein
   - M²: is the repeating unit obtained from radical RAFT polymerization of the at least one ethylenically unsaturated monomer (M₂);
   - each p2: independently is a number from 1 to 500;
   - Z, R, M¹, m and each p1: are the same as in formula (I₁), and wherein if two or more ethylenically unsaturated monomers (M₂) are provided in step I), MAMs are polymerized before LAMs and LAMs are polymerized together or separately, and in any order, and the repeating units M² derived from different ethylenically unsaturated monomers (M₂) may be arranged statistically or in blocks;
V) terminating the polymerization;
VI) optionally isolating the multi-block copolymer (P₂) obtained.

Preferably, steps III) and IV) are carried out in the same vessel without isolating polymer (P₁), thus that the RAFT polymerization is a one-pot RAFT polymerization.

The process of the present invention is described in more detail in the following.

### Step I)

In step I) of the process of the invention, at least one ethylenically unsaturated monomer (M₁) selected from MAMs and at least one ethylenically unsaturated monomer (M₂) selected from LAMs or MAMs other than (M₁) are provided. Preferably, all ethylenically unsaturated monomers (M₂) are selected from LAMs. In the present context, the provision of at least one monomer does not mean that at least one molecule of a certain monomeric compound is provided, but that one or more different monomeric compounds are provided, each in a certain amount.

The number of monomers (M₁) is an integer equal to or greater than 1. For example, 1 to 20, preferably 1 to 10, more preferably 1 to 3, more preferably 1 or 2, particularly preferably 1 monomer (M₁) is provided in step I). In different embodiments, the number of monomers (M₁) may be 1, 2, 3, 4, 5, 6, 7, 8, 9, 10, 11, 12, 13, 14, 15, 16, 17, 18, 19 and 20.

Similarly, the number of monomers (M₂) is an integer equal to or greater than 1. For example, 1 to 20, preferably 1 to 10, more preferably 1 to 3, more preferably 1 or 2, particularly preferably 1 monomer (M₂) is provided in step I). In different embodiments, the number of monomers (M₂) may be 1, 2, 3, 4, 5, 6, 7, 8, 9, 10, 11, 12, 13, 14, 15, 16, 17, 18, 19 and 20.

Typical MAMs and LAMs are disclosed, e.g. in "RAFT Agent Design and Synthesis" (Daniel J. Keddie et al., Macromolecules 2012, 45, pp. 5321-5342), "Reversible Addition Fragmentation Chain Transfer (RAFT) Polymerization: Mechanism, Process and Applications" (Christopher Barner-Kowollik et al., Encyclopedia of Radicals in Chemistry, Biology and Materials, online, 2012, DOI: 10.1002/9780470971253.rad058), RAFT User Guide and the literature cited therein.

In the context of the present invention, a MAM is generally an ethylenically unsaturated monomer having a C=C double bond reactive towards radical addition, wherein the C=C double bond reactive towards radical addition is conjugated to an unsaturated moiety, whereas a LAM is generally an ethylenically unsaturated monomer having a C=C double bond reactive towards radical addition, wherein the C=C double bond reactive towards radical addition is not conjugated to an unsaturated moiety.

Preferably, in a MAM (e.g. the at least one ethylenically unsaturated monomer (M₁)), the C=C double bond that is reactive to radical addition is conjugated to or positioned next to an electron withdrawing group capable of applying a mesomeric -M effect on the C=C double bond. Moreover, preferably in a LAM (e.g. the at least one ethylenically unsaturated monomer (M₂)), the C=C double bond that is reactive to radical addition is not conjugated to or positioned next to a moiety that is capable of applying a mesomeric -M effect on the C=C double bond. For example, the C=C double bond may be conjugated to or positioned next to an electron donating group, such as a moiety capable of applying a mesomeric +M effect on the C=C double bond, and/or even an inductive +I effect on the C=C double bond, if no mesomeric -M effects are present.

More preferably, in a MAM (e.g. the at least one ethylenically unsaturated monomer (M₁)) the C=C double bond reactive to radical addition is conjugated with another double bond or an aryl group, preferably with a C=O double bond, and in a LAM (e.g. the at least one ethylenically unsaturated monomer (M₂)) the C=C double bond reactive to radical addition is not conjugated with another double bond or an aryl group, and is preferably conjugated with a lone electron pair of a heteroatom.

Preferably, the at least one ethylenically unsaturated monomer (M₁) is selected from the group consisting of vinyl aromatics and C-vinyl heteroaromatics, alkyl acrylates, acrylonitriles, N,N-dialkyl acrylamides, alkyl methacrylates, acrylic acid (and salts thereof), methacrylic acid (and salts thereof), N,N-dialkyl methacrylamides, vinyl sulphones, vinylsulphoxides, vinyl phosphinates, vinyl phosphonates and combinations thereof. More preferable ethylenically unsaturated monomers (M₁) are selected from the group consisting of styrene, vinylpyridine, C₁-C₆-alkyl acrylates, N,N-di-C₁-C₆-alkyl acrylamides, C₁-C₆-alkyl methacrylates, acrylic acid (and salts thereof), methacrylic acid (and salts thereof), and combinations thereof. Even more preferable ethylenically unsaturated monomers (M₁) are selected from the group consisting of acrylic acid, N,N-dimethylacrylamide, methacrylic acid, methyl acrylate, ethyl acrylate, methyl methacrylate, acrylamide, 2-acrylamido-2-methylpropane sulfonic acid, (3-acrylamidopropyl) trimethylammonium salts (e.g. chloride), N-[3-(dimethylamino)propyl]methacrylamide, N-[3-(dimethylamino)propyl]acrylamide, N,N-dimethylaminoethylacrylate, (3-methacrylamidopropyl)trimethylammonium salts (e.g.chloride) and 2-aminoethylmethacrylate, and combinations thereof.

Preferably, the at least one ethylenically unsaturated monomer (M₂) is selected from the group consisting of vinyl esters, vinyl ethers, vinyl halides, N-vinyl amides, N-vinyl lactams, N-vinyl heteroaromatic compounds (wherein the heteroatom has a lone electron pair), vinyl silanes, vinyl phosphates, allyl monomers, diallyl monomers, and combinations thereof. More preferred ethylenically unsaturated monomers (M₂) are selected from the group consisting of N-vinylcaprolactam, N-vinylformamid, N-vinylpyrrolidone, vinylacetate, diallyldimethylammonium salts (e.g. chloride), and combinations thereof.

In a preferred embodiment, ethylenically unsaturated monomer (M₁) is selected from the group consisting of vinyl aromatics and heteroaromatics, alkyl acrylates, acrylonitriles, N,N-dialkyl acrylamides, alkyl methacrylates, acrylic acid (and salts thereof), methacrylic acid (and salts thereof), N,N-dialkyl methacrylamides, vinyl sulphones, vinylsulphoxides, vinyl phosphinates, vinyl phosphonates and combinations thereof, preferably styrene, vinylpyridine, C₁-C₆-alkyl acrylates, N,N-di-C₁-C₆-alkyl acrylamides, C₁-C₆-alkyl methacrylates, acrylic acid (and salts thereof), methacrylic acid (and salts thereof) and combinations thereof, more preferably acrylic acid, N,N-dimethylacrylamide, methacrylic acid, methyl acrylate, ethyl acrylate, methyl methacrylate, acrylamide, 2-acrylamido-2-methylpropane sulfonic acid, (3-acrylamidopropyl) trimethylammonium salts (e.g. chloride), N-[3-(dimethylamino)propyl]methacrylamide, N-[3-(dimethylamino)propyl]acrylamide, N,N-dimethylaminoethylacrylate, (3-methacrylamidopropyl)trimethylammonium salts (e.g. chloride), 2-aminoethylmethacrylate and combinations thereof, and ethylenically unsaturated monomer (M₂) is selected from the group consisting of vinyl esters, vinyl ethers, vinyl halides, N-vinyl amides, N-vinyl lactams, N-vinyl heteroaromatics, vinyl silanes, vinyl phosphates, allyl monomers, diallyl monomers and combinations thereof, preferably N-vinylcaprolactam, N-vinylformamid, N-vinylpyrrolidon, vinylacetate, diallyldimethylammonium salts (e.g. chloride) and combinations thereof.

In another preferred embodiment, only one ethylenically unsaturated monomer (M₁) is provided, which is 2-acrylamido-2-methylpropane sulfonic acid, (3-methacrylamidopropyl) trimethylammonium chloride, (3-acrylamidopropyl) trimethylammonium chloride, acrylic acid, N,N-dimethylacrylamide, acrylamide, or an alkylacrylate, and only one ethylenically unsaturated monomer (M₂) is provided, which is N-vinylformamide, N-vinylpyrrolidone, or diallyldimethylammonium chloride.

### Step II)

Step II) of the process of the invention may be carried out before, after or simultaneously with step I) of the process.

In step II) of the process of the invention, a compound having the structure of formula (I) is provided as the chain transfer agent (CTA) to be used in the RAFT polymerization process

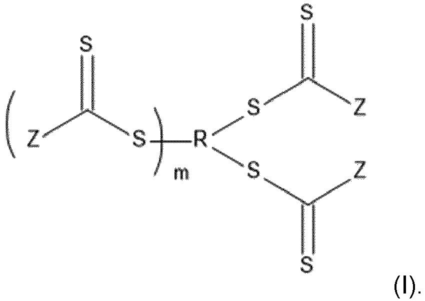

In formula (I), Z is an activating group, which is selected such that the CTA is suited for RAFT polymerization of both MAMs and LAMs. Those skilled in the art know, e.g. from "RAFT Agent Design and Synthesis" (Daniel J. Keddie et al., Macromolecules 2012, 45, pp. 5321-5342), "Reversible Addition Fragmentation Chain Transfer (RAFT) Polymerization: Mechanism, Process and Applications" (Christopher Barner-Kowollik et al., Encyclopedia of Radicals in Chemistry, Biology and Materials, online, 2012, DOI: 10.1002/9780470971253.rad058), RAFT User Guide and the literature cited therein, how Z may be selected for the polymerization of both MAMs and LAMs.

Preferably, Z is selected from electron donating groups containing at least one heteroatom capable of applying a mesomeric +M effect on the adjacent C=S double bond. For example, Z may contain a heteroatom with a lone electron pair, preferably oxygen or nitrogen, and is attached to the carbon atom of the thiocarbonyl group through the heteroatom with a lone pair. Preferably, Z is selected from the group consisting of alkoxy groups, aryloxy groups, amino groups and unsaturated N-heterocycles. More preferably, Z is selected from OR³, unsubstituted pyrazol-1-yl and substituted pyrazol-1-yl, wherein R³ is selected from the group consisting of linear, branched or cyclic, saturated or unsaturated, aliphatic hydrocarbon groups and aromatic hydrocarbon groups; and wherein substituted pyrazol-1-yl is preferably dimethylpyrazol-1-yl, more preferably 3,5-dimethylpyrazol-1-yl. In some embodiments, Z is C₁-C₆ alkoxy, preferably C₁-C₃ alkoxy, more preferably ethoxy. In some embodiments, Z is pyrazol-1-yl. In some embodiments, Z is 3,5-dimethylpyrazol-1-yl.

In formula (I), R is an (m+2)-valent leaving group capable of forming a radical by homolytic cleavage of any of the R-S bonds, wherein the radical thus formed is reactive toward the C=C double bond of the at least one ethylenically unsaturated monomer (M₁) in terms of radical addition. Those skilled in the art know, e.g. from "RAFT Agent Design and Synthesis" (Daniel J. Keddie et al., Macromolecules 2012, 45, pp. 5321-5342), "Reversible Addition Fragmentation Chain Transfer (RAFT) Polymerization: Mechanism, Process and Applications" (Christopher Barner-Kowollik et al., Encyclopedia of Radicals in Chemistry, Biology and Materials, online, 2012, DOI: 10.1002/9780470971253.rad058), RAFT User Guide and the literature cited therein, that such reactivity is beneficial for carrying out controlled RAFT polymerization of ethylenically unsaturated monomers, and which types of functional moieties may be selected in the vicinity of the R-S bond for certain RAFT polymerizations.

For example, R may be an (m+2)-valent leaving group of formula (V) 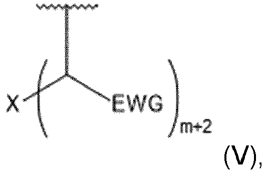 wherein
- X: is any (m+2)-valent moiety, preferably selected from the group consisting of linear, branched or cyclic, saturated or unsaturated, aliphatic hydrocarbon groups and aromatic hydrocarbon groups, preferably saturated aliphatic hydrocarbon groups;
- EWG: is an electron-withdrawing group;
the waved line represents the attachment point of R to a sulfur atom in formula (I), and m is the same as in formula (I).

Preferably, EWG is an electron-withdrawing group capable of applying a mesomeric -M effect on the bond between R and the respective sulfur atom in formula (I). For example, EWG may be selected from the group consisting of cyano, aryl, carbonyl or carboxyl. Preferably, EWG is an alkyloxycarbonyl (alkylcarboxylato-) group or an aryloxycarbonyl (arylcarboxylato-) group. Therefore, R preferably has a structure of formula (II) 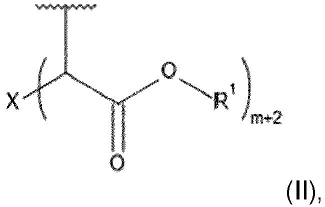 wherein
- X: is the same as in formula (V) and is preferably selected from the group consisting of linear, branched or cyclic, saturated or unsaturated, aliphatic hydrocarbon groups and aromatic hydrocarbon groups, more preferably saturated aliphatic hydrocarbon groups;
- R¹: is selected from the group consisting of hydrogen, linear, branched or cyclic, saturated or unsaturated, aliphatic hydrocarbon groups and aromatic hydrocarbon groups, preferably saturated aliphatic hydrocarbon groups;
- m: is the same as in formula (I); and
the waved line represents the attachment point of R to a sulfur atom in formula (I).

In all of formulae (I), (II) and (V), m has the same value and is an integer equal to or greater than 0. For example, m may be an integer of from 0 to 10, such as 0, 1, 2, 3, 4, 5, 6, 7, 8, 9 or 10. Preferably, m is an integer of from 0 to 5, such as 0, 1, 2, 3, 4 or 5, more preferably an integer of from 0 to 3, such as 0, 1, 2 or 3, more preferably 0 or 1, even more preferably 0. Therefore, R preferably has a structure of formula (IIa) 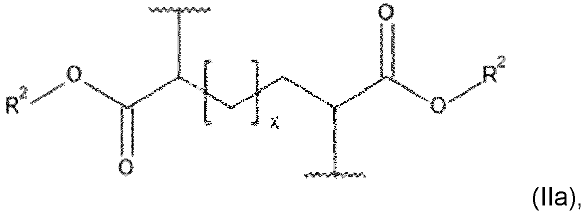 wherein
- R²: is selected from the group consisting of hydrogen, linear, branched or cyclic, saturated or unsaturated, aliphatic hydrocarbon groups and aromatic hydrocarbon groups, preferably saturated aliphatic hydrocarbon groups, more preferably a C₁-C₅ alkyl group, more preferably ethyl;
- x: is an integer equal to or greater than 1, preferably 1 to 6, more preferably 1 ; and
the waved line represents the attachment point of R to a sulfur atom in formula (I).

Preferably, Z is selected from electron donating groups containing at least one heteroatom capable of applying a mesomeric +M effect on the adjacent C=S double bond and R is an (m+2)-valent leaving group of formula (V) as defined above. More preferably, Z is selected from groups containing a heteroatom with a lone electron pair, in particular oxygen or nitrogen, and is attached to the carbon atom of the thiocarbonyl group through the heteroatom with a lone pair, and R is an (m+2)-valent leaving group of formula (V) as defined above. More preferably, Z is selected from the group consisting of alkoxy groups, aryloxy groups, amino groups and unsaturated N-heterocycles, and R is an (m+2)-valent leaving group of formula (II) as defined above. Even more preferably, Z is selected from OR³, unsubstituted pyrazol-1-yl and substituted pyrazol-1-yl, wherein R³ is selected from the group consisting of linear, branched or cyclic, saturated or unsaturated, aliphatic hydrocarbon groups and aromatic hydrocarbon groups; and wherein substituted pyrazol-1-yl is preferably dimethylpyrazol-1-yl, more preferably 3,5-dimethylpyrazol-1-yl, and R has a structure of formula (IIa) as defined above. Particularly preferably, Z is C₁-C₆ alkoxy, preferably C₁-C₃ alkoxy, more preferably ethoxy, or pyrazol-1-yl or 3,5-dimethylpyrazol-1-yl, and R has a structure of formula (II), preferably formula (IIa) as defined above.

Accordingly, in some embodiments, and preferably, the CTA having a structure of formula (I) has a structure of either of formulae (Ia), (Ib) or (Ic)

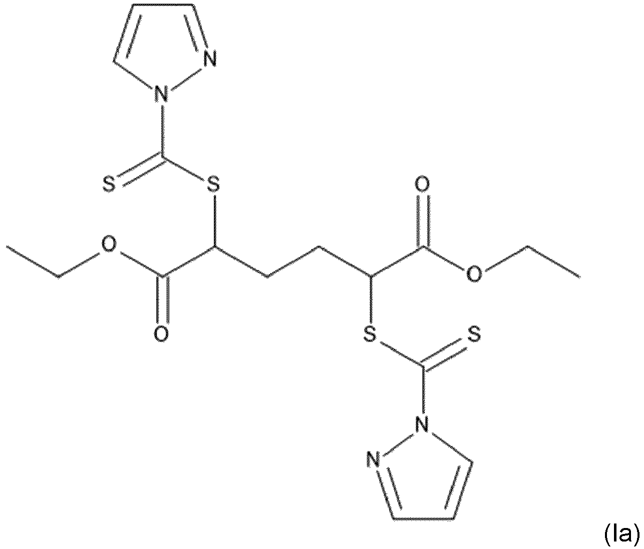

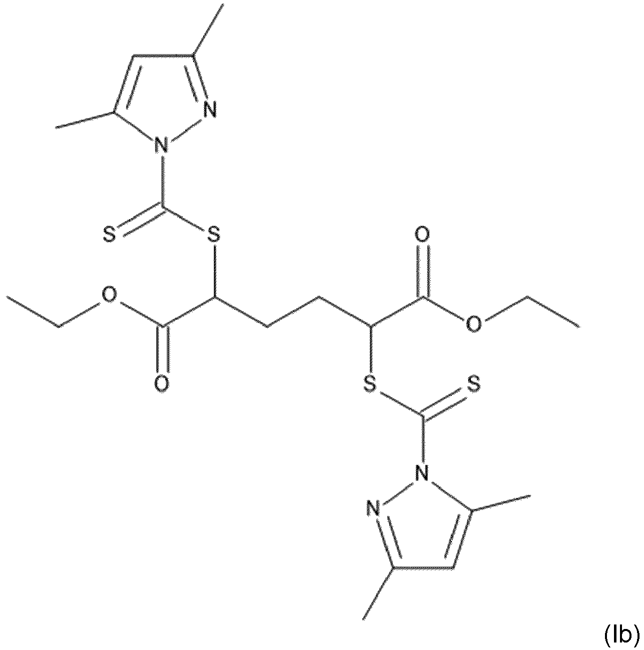

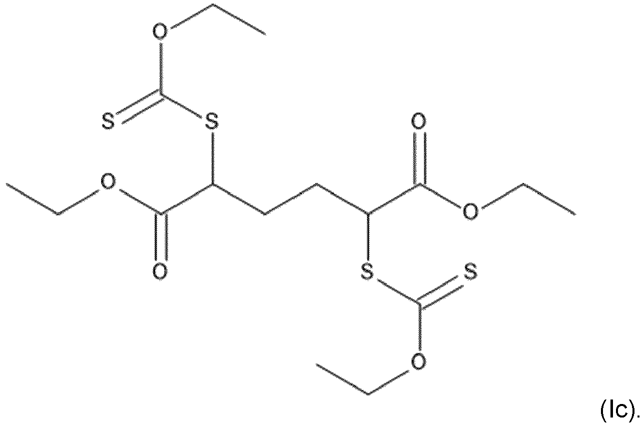

### Step III)

In step III) of the process of the invention, RAFT polymerization of the at least one ethylenically unsaturated monomer (M₁), in the presence of the chain transfer agent (CTA) and a radical initiator, and in the absence of the at least one ethylenically unsaturated monomer (M₂) is carried out. If two or more ethylenically unsaturated monomers (M₁) are provided in step I), the ethylenically unsaturated monomers (M₁) are polymerized together or separately, and in any order.

For example, RAFT polymerization of the at least one ethylenically unsaturated monomer (M₁), may be carried out by preparing a reaction mixture (RM₁) containing one or more ethylenically unsaturated monomers (M₁), the chain transfer agent (CTA) and a radical initiator, and activating the radical initiator to form a radical.

The radical initiator may be any radical initiator capable of forming a radical and initiating a RAFT polymerization process. For example, the radical initiator may be a radical initiator that forms a radical after exposure to light, e.g. UV light, after exposure to heat, or after exposure to a chemical compound or a combination thereof. In some embodiments, a radical is formed by thermal initiation. In some embodiments, a radical is formed by redox initiation. In some embodiments, a radical is formed by light-induced initiation. In certain cases, the ethylenically unsaturated monomers themselves may act as initiators, if they are capable of forming a radical upon exposure to light, heat or a chemical compound. Those skilled in the art are aware of radical initiator suitable for RAFT polymerization, e.g. from RAFT User Guide and the literature cited therein.

Exemplary radical initiators for use in the process of the invention include thermal initiators such as 2,2'-azobis(isobutyronitrile), 2,2'-azobis(2-cyanobutane), dimethyl 2,2'-azobis(isobutyrate), 4,4'-azobis(4-cyanovaleric acid), 1,1 '-azobis(cyclohexanecarbonitrile), 2-(t-butylazo)-2-cyanopropane, 2,2'-azobis{2-methyl-N-[1,1-bis(hydroxymethyl)-2-hydroxyethyl]propionamide}, 2,2'-azobis[2-methyl-N-(2-hydroxyethyl)propionamide], 2,2'-azobis(N,N'-dimethyleneisobutyramidine) dihydrochloride, 2,2'-azobis(2-amidinopropane) dihydrochloride, 2,2'-azobis(N,N'-dimethyleneisobutyramidine), 2,2'-azobis{2-methyl-N-[1,1 -bis(hydroxymethyl)-2-hydroxyethyl]propionamide}, 2,2'-azobis{2-methyl-N-[1,1-bis(hydroxymethyl)-2-ethyl]propionamide}, 2,2'-azobis[2-methyl-N-(2-hydroxyethyl)propionamide], 2,2'-azobis(isobutyramide) dihydrate, 2,2'-azobis(2,2,4-trimethylpentane), 2,2'-azobis(2,4-dimethyl-4-methoxyvaleronitrile), 2,2'-azobis(2-methylpropane), t-butyl peroxyacetate, t-butyl peroxybenzoate, t-butyl peroxyneodecanoate, t-butylperoxy isobutyrate, t-amyl peroxypivalate, t-butyl peroxypivalate, diisopropyl peroxydicarbonate, dicyclohexyl peroxydicarbonate, dicumyl peroxide, dibenzoyl peroxide, dilauroyl peroxide, potassium peroxydisulfate, ammonium peroxydisulfate, di-t-butyl hyponitrite, dicumyl hyponitrite, 2,2'-azobis[2-(2-imidazolin-2-yl)propane] dihydrochloride. This list is not exhaustive.

Furthermore, exemplary radical initiators for use in the process of the invention include redox initiators such as potassium, peroxydisulfate, hydrogen peroxide, t-butyl hydroperoxide, iron (II), titanium (III), potassium thiosulfite, potassium bisulfite, and photoinitiators such as (+/-)-camphorquinone, acetophenone, 3-acetophenol, 4-acetophenol, benzophenone, 2-methylbenzophenone, 3-methylbenzophenone, 3-hydroxybenzophenone, 3,4-dimethylbenzophenone, 4-hydroxybenzophenone, 4-benzoylbenzoic acid, 2-benzoylbenzoic acid, methyl 2-benzoylbenzoate, 4,4'-dihydroxybenzophenone, 4-(dimethylamino)-benzophenone, 4,4'-bis(dimethylamino)-benzophenone, 4,4'-bis(diethylamino)-benzophenone, 4,4'-dichlorobenzophenone, 4-(p-tolylthio)benzophenone, 4-phenylbenzophenone, 1,4-dibenzoylbenzene, benzil, 4,4'-dimethylbenzil, p-anisil, 2-benzoyl-2-propanol, 2-hydroxy-4'-(2-hydroxyethoxy)-2-methylpropiophenone, 1-benzoylcyclohexanol, benzoin, anisoin, benzoin methyl ether, benzoin ethyl ether, benzoin isopropyl ether, benzoin isobutyl ether, o-tosylbenzoin, 2,2-diethoxyacetophenone, benzil dimethylketal, 2-methyl-4'-(methylthio)-2-morpholinopropiophenone, 2-benzyl-2-(dimethylamino)-4'-morpholinobutyrophenone, 2-isonitrosopropiophenone, anthraquinone, 2-ethylanthraquinone, sodium anthraquinone-2-sulfonate monohydrate, 9,10-phenanthrenequinone, 9,10-phenanthrenequinone, dibenzosuberenone, 2-chlorothioxanthone, 2-isopropylthioxanthone, 2,4-diethylthioxanthen-9-one, 2,2'-bis(2-chlorophenyl)-4,4',5,5'-tetraphenyl-1,2'-biimidazole, diphenyl(2,4,6-trimethyl-benzoyl)phosphine oxide, phenylbis(2,4,6-trimethyl-benzoyl)phosphine oxide, lithium phenyl(2,4,6-trimethylbenzoyl)phosphinate. This list is not exhaustive.

For example, the radical initiator may be selected from the group consisting of 2,2'-azobis(isobutyronitrile) (AIBN), 1,1'-azobis(cyclohexanecarbonitrile) (ACHN), ammoniumperoxydisulfate, and 2,2'-azobis[2-(2-imidazolin-2-yl)propane] dihydrochloride, preferably 2,2'-azobis[2-(2-imidazolin-2-yl)propane] dihydrochloride.

Other ingredients in the reaction mixture (RM₁) may include, e.g., solvents, surfactants, and other polymerization auxiliaries and additives. Preferably, the reaction mixture (RM₁) contains a solvent, for example, water; alcohols, such as methanol, ethanol, 2-propanol, tert-butanol and 2-butanol; aromatic hydrocarbons, such as toluene, xylenes or petroleum naphtha; ketones, such as methyl amyl ketone, methyl isobutyl ketone, methyl ethyl ketone or acetone; esters, such as butyl acetate or hexyl acetate; ethers, such as 1,2-dimethoxyethane, tetrahydrofuran and dioxane; nitriles, such as acetonitrile; and glycol ether esters, such as propylene glycol monomethyl ether acetate. Preferably, the solvent is selected from acetone, water and 2-propanol.

The preparation of the reaction mixture (RM₁) may be carried out by any means known in the art, e.g. by stationary mixing, stirring, shaking, diffusion, etc. and in any vessel suitable for preparing a reaction mixture (RM₁). Furthermore, the components of the reaction mixture (RM₁) may be combined in any order. Preferably, the radical initiator is added after the other components were mixed together. The activation of the radical initiator may also be carried out by any means known in the art for the respective initiator, and is preferably carried out in the vessel, in which the RAFT polymerization takes place.

Preferably, the CTA is used in a greater molar amount than the radical initiator. More preferably the molar ratio of CTA to radical initiator is in the range of from 1000:1 to 1000:500, more preferably in the range of from 1000:2 to 1000:400, more preferably in the range of from 1000:10 to 1000:250, more preferably in the range of from 1000:200 to 1000:50. In some embodiments, the molar ratio of CTA to radical initiator is approximately 1000:100.

Furthermore, the molar ratio of ethylenically unsaturated monomer (M₁) to CTA is preferably in the range of from 2000:1 to 10:1, more preferably from 1500:1 to 15:1, more preferably from 1000:1 to 20:1, more preferably from 500:1 to 30:1, more preferably from 100:1 to 40:1.

The RAFT polymerization in step III) is carried out until ethylenically unsaturated monomer (M₁) is at least partially consumed. If the transitions between individual polymer blocks in the final product are intended to be hard transitions, ethylenically unsaturated monomer (M₁) has to be essentially entirely, preferably entirely consumed. If the transitions are intended to be gradual, partial consumption of ethylenically unsaturated monomer (M₁) is sufficient. Preferably, the ethylenically unsaturated monomer (M₁) is consumed in an amount of 10 to 99 mol-%, more preferably in an amount of 40 to 98 mol-%, more preferably in an amount of 50 to 95 mol-%, more preferably in an amount of 70 to 90 mol-% of the total amount of ethylenically unsaturated monomer (M₁).

After said consumption, one or more other ethylenically unsaturated monomers (M₁) and/or more of the same ethylenically unsaturated monomers (M₁) may optionally be added to the reaction, and the RAFT polymerization may be continued thereafter, if the degree of polymerization is considered insufficient or additional blocks of ethylenically unsaturated monomers (M₁) are needed.

In the present context, the term "consumed" means that the ethylenically unsaturated monomer has undergone radical polymerization or another reaction, in which the ethylenically unsaturated C=C double bond reactive toward radical addition has become saturated or otherwise non-reactive toward radical addition.

In the course of step III), a polymer (P₁) having a structure of formula (I₁) is formed 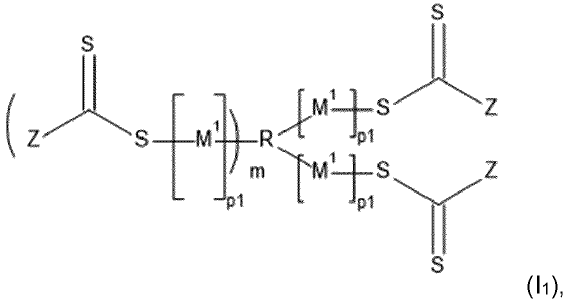 wherein
- M¹: is the repeating unit obtained from radical RAFT polymerization of ethylenically unsaturated monomer (M₁);
- each p1: independently is a number equal to or greater than 1, preferably from 1 to 500, preferably from 10 to 450, more preferably from 20 to 400, more preferably from 25 to 300;
- Z, R and m: are the same as in formula (I).

If two or more ethylenically unsaturated monomers (M₁) are provided in step I), the repeating units M¹ derived from different ethylenically unsaturated monomers (M₁) may be arranged statistically or in blocks, depending on whether the two or more ethylenically unsaturated monomers (M₁) are polymerized together or separately.

In the course of step III), each p1 independently increases over time. In general, each p1 increases at a similar rate in each individual molecule of formula (I₁). However, the polymer chain lengths vary to a certain extent, and each p1 may be the same or different within a single molecule of formula (I₁) and among different molecules of formula (I₁). For example, the number-average value of p1 can be from 10 to 450, preferably from 20 to 400, more preferably from 25 to 300, more preferably from 30 to 200, and the standard deviation of the value of p1 can be smaller than 50%, preferably smaller than 40%, more preferably smaller than 30%, more preferably smaller than 20%, more preferably smaller than 10%, more preferably smaller than 5% of the number average value of p1.

In some cases, the number of radicals in the reaction mixture (RM₁) may deteriorate over time due to termination reactions, and the reaction may end before the consumption of ethylenically unsaturated monomer (M₁) is sufficient. In these cases, more radical initiator is preferably added to the reaction mixture (RM₁) and activated in step IV), in order to keep the reaction going or to reinitiate the reaction. Preferably, the radical initiator is the same as before.

Preferably, the reaction in step IV) is carried out at a temperature of from 20 to 120 °C, more preferably of from 30 to 100 °C, more preferably of from 40 to 80 °C, more preferably of from 50 to 70 °C.

### Step IV)

In step IV) of the process of the invention, RAFT polymerization of the at least one ethylenically unsaturated monomer (M₂) is carried out in the presence of the polymer (P₁) formed in step III), and optionally in the presence of more radical initiator. If two or more ethylenically unsaturated monomers (M₂) are provided in step I), MAMs are polymerized before LAMs and LAMs are polymerized together or separately, and in any order.

For example, RAFT polymerization of the at least one ethylenically unsaturated monomer (M₂), may be carried out by adding the at least one ethylenically unsaturated monomer (M₂) to the reaction mixture (RM₁) obtained from step III) to obtain a reaction mixture (RM₂). Optionally, more radical initiator, which is preferably the same as in step III), may be added to the reaction mixture (RM₂) and activated. This may be beneficial if the radical concentration in the reaction mixture (RM₁) after step III) is too low due to radical deterioration over time caused by termination reactions. When hard transitions between individual polymer blocks are intended, and therefore ethylenically unsaturated monomer (M₁) is essentially entirely or entirely consumed, termination reactions occur more frequently, and therefore addition and activation of more radical initiator in step IV) can be particularly beneficial.

The addition of ethylenically unsaturated monomer (M₂) to the reaction mixture (RM₁) may be carried out by any means known in the art, e.g. dropwise, portionwise, in bulk, etc. and is preferably carried out in the vessel, wherein step III) was carried out.

If a radical initiator is added in step IV), preferably the molar ratio of CTA of formula (I) provided in step (II) to radical initiator added in step IV) is in the range of from 1000:1 to 1000:500, more preferably in the range of from 1000:2 to 1000:400, more preferably in the range of from 1000:10 to 1000:250, more preferably in the range of from 1000:200 to 1000:50. In some embodiments, the molar ratio of CTA to radical initiator is approximately 1000:100. In some embodiments, the molar ratio of CTA to radical initiator added in step V) is the same as the molar ratio of CTA to radical initiator added in step III).

Furthermore, the molar ratio of ethylenically unsaturated monomer (M₂) added in step V) to CTA of formula (I) provided in step II) is preferably in the range of from 2000:1 to 10:1, more preferably from 1500:1 to 15:1, more preferably from 1000:1 to 20:1, more preferably from 500:1 to 30:1, more preferably from 100:1 to 40:1.

RAFT polymerization in step IV) is carried out until ethylenically unsaturated monomer (M₂) is at least partially consumed.

After said consumption, one or more other ethylenically unsaturated monomers (M₂) and/or more of the same ethylenically unsaturated monomers (M₂) may optionally be added to the reaction, and the RAFT polymerization may be continued thereafter, if the degree of polymerization is considered insufficient or additional blocks of ethylenically unsaturated monomers (M₂) are needed. If this is the case, it may be beneficial if the ethylenically unsaturated monomer (M₂) is consumed in an amount of 5 to 99 mol-%, more preferably in an amount of 10 to 98 mol-%, more preferably in an amount of 15 to 95 mol-%, more preferably in an amount of 20 to 90 mol-% of the total amount of ethylenically unsaturated monomer (M₂). If no further addition of ethylenically unsaturated monomers (M₂) is carried out, the ethylenically unsaturated monomer (M₂) is preferably essentially entirely, preferably entirely consumed.

In the course of step IV), a multi-block copolymer (P₂) having a structure of formula (I₂) is formed 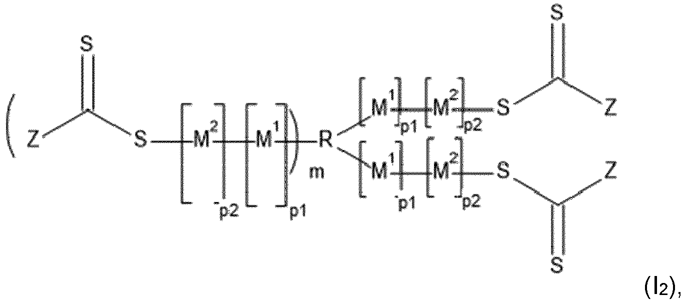 wherein
- M²: is the repeating unit obtained from radical polymerization of ethylenically unsaturated monomer (M₂);
- each p2: independently is a number equal to or greater than 1, preferably from 1 to 500, preferably from 10 to 450, more preferably from 20 to 400, more preferably from 25 to 300;
- Z, R, M¹, m and each p1: are the same as in formula (I₁).

If two or more ethylenically unsaturated monomers (M₂) are provided in step I), the repeating units M² derived from different ethylenically unsaturated monomers (M₂) may be arranged statistically or in blocks, depending on whether the two or more ethylenically unsaturated monomers (M₂) are polymerized together or separately.

In the course of step IV), each p2 independently increases over time. In general, each p2 increases at a similar rate in each individual molecule of formula (I₂). However, the polymer chain lengths vary to a certain extent, and each p2 may be the same or different within a single molecule of formula (I₂) and among different molecules of formula (I₂). For example, the number-average value of p2 can be from 10 to 450, preferably from 20 to 400, more preferably from 25 to 300, more preferably from 30 to 200, and the standard deviation of the value of p2 can be smaller than 50%, preferably smaller than 40%, more preferably smaller than 30%, more preferably smaller than 20%, more preferably smaller than 10%, more preferably smaller than 5% of the number average value of p2.

In some cases, the number of radicals in the reaction mixture (RM₂) may deteriorate over time due to termination reactions, and the reaction may end before the consumption of ethylenically unsaturated monomer (M₂) is complete. In these cases, more radical initiator is preferably added to the reaction mixture (RM₂) and activated in step IV), in order to keep the reaction going or to reinitiate the reaction. Preferably, the radical initiator is the same as before.

The reaction conditions in step IV) are defined as in step III), and in some embodiments are the same as in step III).

### Step V)

In step V) of the process of the invention, the RAFT polymerization reaction is terminated. Termination may be carried out by any means known in the art. For example, the polymerization may be terminated by allowing the remaining radicals to deteriorate over time through recombination of radicals or by adding a radical scavenger compound to the reaction mixture. Preferably, the polymerization is terminated by recombination of active radicals, i.e. no further agents are actively added to terminate the reaction.

After the RAFT polymerization of the monomer (M₂) is completed, the multi-block copolymer (P₂) of the invention is obtained. However, for practical reasons, it may be useful to carry out further steps, in order to make the multi-block copolymer suitable for certain applications.

### Optional step VI)

In optional step VI) of the process of the invention, the multi-block copolymer (P₂) obtained after terminating the polymerization can be isolated. Isolation may be carried out by any means known in the art and includes any known means for purifying and/or further processing of polymers. For example, the polymer obtained after step V) may be isolated by removal of solvents, remaining ethylenically unsaturated monomers and other ingredients through any known means such as distillation, extraction or chromatography. Furthermore, after purification, the obtained polymer may be modified, e.g. by replacement of the -S-C(=S)-Z moiety by another end group. Such modification may be achieved, e.g. by basic or acidic hydrolysis of the thioester bond.

Another aspect of the present invention is a copolymer obtainable by RAFT polymerization of at least one ethylenically unsaturated monomer (M₁) as described above, and at least one ethylenically unsaturated monomer (M₂) as described above in the presence of a chain transfer agent (CTA) as described above. Preferably, the copolymer is a multi-block copolymer (P₂) having a structure of formula (I₂) as disclosed above, i.e. a multi-block copolymer prepared by the process of the present invention. Optionally, in the multi-block copolymer, the -S-C(=S)-Z may be replaced by a different end group, such as, but not limited to, R⁴, OR⁴, SR⁴, N(R⁴)₂, wherein each R⁴ is independently selected from the group consisting of hydrogen, linear, branched or cyclic, saturated or unsaturated, aliphatic hydrocarbon groups and aromatic hydrocarbon groups.

Preferably, the multi-block copolymer has a structure of formula (I₂) as disclosed above. In this multi-block copolymer, M¹ is a repeating unit derived from at least one MAM, more preferably from vinyl aromatics, C-vinyl heteroaromatics, alkyl acrylates, acrylonitriles, N,N-dialkyl acrylamides, alkyl methacrylates, acrylic acid (and salts thereof), methacrylic acid (and salts thereof), N,N-dialkyl methacrylamides, vinyl sulphones, vinylsulphoxides, vinyl phosphinates, vinyl phosphonates and combinations thereof, more preferably styrene, vinylpyridine, C₁-C₆-alkyl acrylates, N,N-di-C₁-C₆-alkyl acrylamides, C₁-C₆-alkyl methacrylates, acrylic acid (and salts thereof), methacrylic acid (and salts thereof), and combinations thereof, more preferably acrylic acid, N,N-dimethylacrylamide, methacrylic acid, methyl acrylate, ethyl acrylate, methyl methacrylate, acrylamide, 2-acrylamido-2-methylpropane sulfonic acid, (3-acrylamidopropyl) trimethylammonium salts (e.g. chloride), N-[3-(dimethylamino)propyl]methacrylamide, N-[3-(dimethylamino)propyl]acrylamide, N,N-dimethylaminoethylacrylate, (3-methacrylamidopropyl)trimethylammonium salts (e.g. chloride), 2-aminoethylmethacrylate and combinations thereof, and M² is a repeating unit derived from at least one LAM, more preferably from vinyl esters, vinyl ethers, vinyl halides, N-vinyl amides, N-vinyl lactams, N-vinyl heteroaromatics, vinyl silanes, vinyl phosphates, allyl monomers, diallyl monomers and combinations thereof, more preferably N-vinylcaprolactam, N-vinylformamid, N-vinylpyrrolidon, vinylacetate, diallyldimethylammonium salts (e.g. chloride) and combinations thereof, more preferably from diallyldimethylammonium chloride, N-vinylpyrrolidone, N-vinylformamide or combinations thereof.

Furthermore, the ratio of repeating units M¹ to M² is preferably in the range of from 50:50 to 99:1, more preferably of from 60:40 to 95:5, more preferably of from 70:30 to 92:8.

Furthermore, preferably the multi-block copolymer has a number average molecular weight (Mn) in the range of from 1.000 to 1.000.000 Da, more preferably of from 5.000 to 900.000 Da, more preferably of from 10.000 to 200.000 Da (measured by size exclusion chromatography, with polyacrylic acid standards for calibration). Suitable instruments for measuring molecular weights are known in the art and commercially available.

Moreover, preferably the multi-block copolymer has a polydispersity index (Mw/Mn) of less than 5, preferably less than 3, more preferably less than 2, wherein Mw is the weight average molecular weight (measured by size exclusion chromatography, with polyacrylic acid standards for calibration).

Another aspect of the present invention is the use of the multi-block copolymer as described above as an emulsifying or dispersing agent, rheology or viscosity modifier in lubricating fluids, emulsion binder, detergent for laundry treatment, or for biological applications for drug delivery systems.

Another aspect of the present invention is a chain transfer agent (CTA) having the structure of formula (I) as defined above, with the proviso that R does not contain any moieties obtained from the reaction of a siloxane moiety with an isocyanate moiety. For Example, R may be an (m+2)-valent leaving group of formula (V) 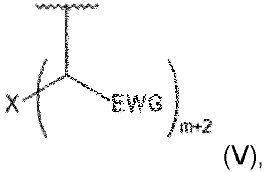 wherein
- X: is a (m+2)-valent moiety selected from the group consisting of linear, branched or cyclic, saturated or unsaturated, aliphatic hydrocarbon groups and aromatic hydrocarbon groups, preferably saturated aliphatic hydrocarbon groups;
- EWG: is an electron withdrawing group;
the waved line represents the attachment point of R to a sulfur atom in formula (I), and m is the same as in formula (I). X and EWG may be further defined as in any of the embodiments described above.

The CTA is not limited to the use in a method for the preparation of multi-block copolymers, and may be, e.g. also used for the preparation of homopolymers and random copolymers.

Another aspect of the present invention is the use of a compound having the structure of formula (I) as described above as a chain transfer agent (CTA) in the preparation of a copolymer from at least one ethylenically unsaturated monomer (M₁) selected from MAMs, e.g. as defined above, and at least one ethylenically unsaturated monomer (M₂) selected from LAMs and MAMs other than (M₁), e.g. as defined above, by radical RAFT polymerization. Preferably, the compound having the structure of formula (I) is used as CTA in the preparation of a multi-block copolymer, which is preferably a multi-block copolymer of formula (I₂) as described above. More preferably, the multi-block copolymer contains the structural element B-A-B, wherein each B individually represents a polymer block obtainable by RAFT polymerization of an ethylenically unsaturated monomer (M₂) as defined above, and A represents a polymer block obtainable by RAFT polymerization of an ethylenically unsaturated monomer (M₁) as defined above, and wherein A is the innermost polymer block of the multi-block copolymer. It will be understood by those skilled in the art that the innermost block A of the multi-block copolymer is divided into two parts by the group R from the CTA of formula (I), as defined above. Furthermore, it will be understood by those skilled in the art that the innermost block A is essentially linear and is attached to two blocks B, if m in formula (I) is 0, and is branched (e.g. star-shaped or comb-shaped) and is attached to more than two blocks B, if m in formula (I) is greater than 0.

Accordingly, a structural element B-A-B can be understood as a block-copolymeric structure P((M₂)-*b*-(M₁)-*b*-(M₂)), i.e. a multi-block copolymer wherein a block A prepared from monomers (M₁) is the innermost block and block B prepared from monomers (M₂) is the block attached to block A.

Yet another aspect of the present invention is a process for the preparation of a chain transfer agent (CTA) of formula (I) as described above, comprising the step of treating a compound having the structure of formula (III) with a compound having the structure of formula (IV) in a nucleophilic substitution reaction 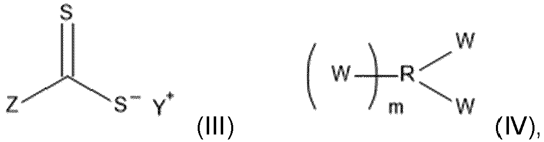 wherein
- Z: is defined as in formula (I) above;
- Y⁺: is a counterion, preferably an ammonium cation or a metal cation;
- R and m: are defined as in formula (I) above; and
- W: is a nucleophilic substitution leaving group, preferably halide, more preferably bromide.

This process may further include steps of preparation of compounds of formulae (III) and (IV) prior to said nucleophilic substitution reaction, if specific compounds of formulae (III) and (IV) are not commercially available. For example, the compound of formula (III) may be prepared by reaction of a compound having structure Z-H with carbon disulfide in the presence of a base, or after deprotonation of Z-H with a base in a preceding step.

The present invention will be further illustrated by the following examples.

Analytical characterization:
HRMS Measurement
5 mg of the CTA were dissolved in 10 mL of methanol and diluted 1:100 in methanol. The HRMS measurement was performed with an Ultimate-HPLC - Q Exactive Focus system of Thermo Scientific.

### NMR Measurement

20 mg of the CTA were dissolved in 0.5 mL chloroform-d1 (CDCl₃) or DMSO-d₆. Polymer samples (200 mg) for reaction control were dissolved in DMSO-d₆. ¹H NMR and ¹³C NMR were recorded with a 400 MHz (Bruker) spectrometer.

### SEC Measurement

The molecular weight distribution was determined via size exclusion chromatography (SEC). The polymer solution (5 mg/mL) was dissolved in eluent and measured via SUPREMA SEC columns from PSS (Polymer Standards Service GmbH) using an Agilent 1100 chromatography system with a refractive index and UV detector. The molecular weight was determined using polyacrylic acid (PAA) samples from PSS as molecular weight standards, unless stated otherwise. A water/acetonitrile mixture (80:20 vol%) containing 0.035 mol/L di-sodium hydrogen phosphate was used as eluent, unless stated otherwise. The measurement was performed at 23 °C with a flow rate of 1 mL/min, unless stated otherwise.

### Example 1: Preparation of a CTA, with Z = 3,5-dimethylpyrazol-1-yl

The symmetric RAFT agent was synthesized through a nucleophilic substitution of bromine of the diethyl meso-2,5-dibromoadipate with 3,5-dimethylpyrazol and carbon disulfide. 3,5-dimethylpyrazol (0.04 mol, 3.6 g) was added to a mixture of acetone (40 mL) and aqueous sodium hydroxide solution (0.06 mol, w = 50 %) at 3 - 5 °C. At 3 - 5 °C, carbon disulfide (0.05 mol, 3.95 g) dissolved in acetone (20 mL) was added dropwise. The yellowish reaction mixture was stirred for 12 h at room temperature. Diethyl meso-2,5-dibromoadipate (0.02 mol, 8.07 g) dissolved in acetone (20 mL) was added within 20 min. The reaction mixture was cooled with a water bath. After stirring for 12 h the reaction mixture was concentrated to dryness. For purification, the product was dissolved in water. The acidified water phase was extracted twice with ethyl acetate (40 mL). The combined organic layers were washed with water, dried over sodium sulfate and the solvent was evaporated. The product was characterized by high resolution mass spectrometry, ¹H NMR spectroscopy and ¹³C NMR spectroscopy.

HRMS (*m*/*z*): calcd for C₂₂H₃₀N₄O₄S₄, 542.11; found, 543.12 [M + H]+. ¹H NMR (400 MHz, CDCl₃, δ): δ 6.09 (s, 2H), 3.93 (qd, J = 6.3, 2.2 Hz, 4H), 3.27 (tt, J = 4.3, 1.9 Hz, 2H), 2.41 (m, 2H), 2.28 (s, 6H), 2.18 (m, 2H), 2.16 (s, 6H), 0.90 (m, 6H). ¹³C NMR (100 MHz, CDCl₃, δ, ppm): 13.6 (CH₃), 14.2 (CH₃), 17.3 (OCH₂**C**H₃), 28.8 (**C**H₂**C**H₂), 52.1 (CHS), 61.8 (O**C**H₂CH₃), 113.6 (C**=C**H), 145.9 (**C**NCH₃), 152.1 (**C**=NCH₃), 170.6 (C=O), 198.3 (C=S).

### Example 2: Preparation of a CTA, with Z = ethoxy

The symmetric RAFT agent was synthesized through a nucleophilic substitution of bromine of the diethyl meso-2,5-dibromoadipate with potassium ethyl xanthate. Potassium ethyl xanthate (0.06 mol, 9.6 g). Diethyl meso-2,5-dibromoadipate (0.03 mol, 10.8 g) was added at 4 °C. The orange reaction mixture was stirred for 15 min at 4 °C and further stirred at 25 °C for 12 h. For purification, the mixture was cooled to 4 °C, the precipitate was separated by filtration and washed three times with 20 mL of water. The precipitate was then dried at 50 mbar and 35 °C. The product was characterized by ¹H NMR spectroscopy and ¹³C NMR spectroscopy.

¹H NMR (400 MHz, DMSO-*d*₆) δ 4.69 - 4.54 (m, 4H), 4.38 (dd, *J* = 4.5, 2.1 Hz, 2H), 4.22 - 4.08 (m, 5H), 2.14 - 1.84 (m, 5H), 1.42 - 1.26 (m, 6H), 1.20 (td, *J* = 7.1, 4.0 Hz, 8H).

¹³C NMR (101 MHz, DMSO-*d*₆) δ 211.39, 211.34, 170.09, 170.03, 169.37, 71.24, 62.13, 62.00, 60.22, 51.24, 51.16, 46.24, 46.12, 32.16, 32.08, 30.01, 28.58, 28.45, 21.18, 14.52, 14.42, 14.39, 14.20, 13.79.

### Example 3: RAFT polymerization

In a two-necked round-bottom flask, acrylic acid (AA) (28 mmol, 2 g) and CTA from Example 1 (0.4 mmol, 224 mg) were dissolved in 18 g of water and 6 g of 2-propanol. 0.35 mg of 1,3,5-trioxane was added as internal reference for NMR analysis. After deoxygenation by evacuation and nitrogen purge the resulting mixture was heated to 60°C and initiated with the radical initiator 2,2'- azobis[2-(2-imidazolin-2-yl)propane] dihydrochloride (13.3 mg, 0.04 mmol). The heating was continued for 4 h, after which the mixture was cooled to room temperature.

The controlled radical polymerization with the CTA from Example 1 was also investigated for the ethylenically unsaturated monomers methacrylic acid (MAA), N,N-dimethylacrylamide (DMAA) and N-vinylformamide (NVF).

The amount of ethylenically unsaturated monomer for P(MAA) was 23 mmol, 2 g, for P(DMAA) was 20 mmol, 2 g and for P(NVF) 28 mmol, 2 g.

### Examples 4 and 5: RAFT block copolymerization.

RAFT polymerizations affording triblock copolymers with the block structure B-A-B were investigated subsequently. The following triblock copolymers were studied: P(DMAA-*b*-AA-*b*-DMAA) and P(NVP-*b*-DMAA*-b*-NVP).

In a two-necked round-bottom flask 25 mmol of ethylenically unsaturated monomer (M₁) of block A and 0.4 mmol of CTA from Example 1 were dissolved in 18 g of water and 6 g of 2-propanol. 0.35 mg of 1,3,5-trioxane was added as internal reference for NMR analysis. After deoxygenation by evacuation and nitrogen purge, the resulting mixture was heated to 60°C and initiated with the radical initiator 2,2'-azobis[2-(2-imidazolin- 2-yl)propane] dihydrochloride (13.3 mg, 0.04 mmol). After the synthesis of block A, 250 mmol of ethylenically unsaturated monomer (M₂) of block B was added and re-initiated with 0.04 mol of the initiator. The heating was continued for 4 h, after which the mixture was cooled to room temperature.
Mn (P(DMAA-*b*-AA-*b*-DMAA)) = 4,500 Da; PDI (Mw/Mn) = 3.1
Mn (P(NVP-*b*-DMAA-*b*-NVP)) = 3,100 Da; PDI (Mw/Mn) = 2.7

### Examples 6-20

RAFT polymerizations affording triblock copolymers with the block structure B-A-B were investigated. The polymerizations were carried out with an active monomer content of 20% in a 4:1 water/2-propanol mixture. 1,3,5-trioxane was added as internal reference for NMR analysis. For the preparation of blocks A having different average block lengths, AMPS (2-acrylamido-2-methylpropane sulfonic acid) was used as monomer (M₁) in 70 mol%, 80 mol%, 90 mol% (of the ethylenically unsaturated monomers used for the polymers). The CTA of Example 1 or Example 2 was added in an amount of 0.2 mmol. The polymerization of AMPS to form block A was carried out at 60 °C, after initiation with 0.02 mmol of 2,2'-azobis[2-(2-imidazolin- 2-yl)propane] dihydrochloride. After reaching a conversion of 90%, the respective monomer (M₂) of block B was added in an amount of 30 mol%, 20 mol% or 10 mol% (of the ethylenically unsaturated monomers used for the polymers) respectively. The polymerization of the monomer (M₂) to form block B was initiated with a further 0.02 mol of 2,2'-azobis[2-(2-imidazolin- 2-yl)propane] dihydrochloride. The conversion was determined by comparing the signal of 1,3,5-trioxane at δ = 5.13 ppm relatively to the signals of the double bond of each investigated ethylenically unsaturated monomer.

Monomers (M₂) of block B used included N-vinylpyrrolidone (NVP), N-vinylformamide (NVF) and diallyldimethyl ammonium chloride (DADMAC) and (3-acrylamidopropyl)trimethyl ammonium chloride (AAPTAC). The molar content of comonomer (M₁) in the resulting block-copolymer was determined from ICP-OES measurement of the sulfur content derived from AMPS (block A)

The results are shown in Table A:

**Table A (Examples 1 to 20 abbreviated as Ex. 1 to 20):**

| CTA from | Comonomer (M₂) | | AMPS used [mol%] | mol% AMPS in polymer | Mn [Da] | PDI (Mw/Mn) |
|---|---|---|---|---|---|---|
| Ex. 1 | NVP | Ex. 6 | 70 | 70 | 32.100 | 1.6 |
| | | Ex. 7 | 80 | 82 | 33,400 | 1.7 |
| | | Ex. 8 | 90 | 91 | 28,800 | 1.7 |
| | NVF | Ex. 9 | 70 | 73 | 24,200 | 1.8 |
| | | Ex. 10 | 80 | 83 | 48,100 | 1.8 |
| | | Ex. 11 | 90 | 89 | 49,300 | 1.6 |
| | AAPTAC | Ex. 12 | 70 | 74 | 28,100 | 1.5 |
| | | Ex. 13 | 80 | 82 | 26,800 | 1.5 |
| | | Ex. 14 | 90 | 91 | 36,200 | 1.9 |
| Ex.2 | NVF | Ex. 15 | 70 | 74 | 127,600 | 1.5 |
| | | Ex. 16 | 80 | 82 | 37,900 | 1.6 |
| | | Ex. 17 | 90 | 88 | 38,300 | 1.8 |
| | DADMAC | Ex. 18 | 70 | 69 | 25,500 | 1.8 |
| | | Ex. 19 | 80 | 81 | 28,600 | 1.6 |
| | | Ex. 20 | 90 | 90 | 27,700 | 1.8 |

### Example 21

RAFT polymerizations affording pentablock copolymers with the block structure (B-A₂-A₁-A₂-B) are prepared with an active monomer content of 20% in a 4:1 water/2-propanol mixture. For this, 1,3,5-trioxane is added as internal reference for NMR analysis. For the preparation of blocks A₁, AMPS as a first monomer (M₁) (2-acrylamido-2-methylpropane sulfonic acid) is added in 50 mol% (of the ethylenically unsaturated monomers used for the polymer). The CTA of Example 1 or Example 2 is added in an amount of 0.2 mmol. The polymerization of block A₁ is carried out at 60 °C, after initiation with 0.02 mmol of 2,2'-azobis[2-(2-imidazolin-2-yl)propane] dihydrochloride. After reaching a conversion of 90%, styrene as a second monomer (M₁) for forming block A₂ is added in 30 mol% (of the ethylenically unsaturated monomers used for the polymer). The polymerization of block A₂ is initiated with a further 0.02 mol of 2,2'-azobis[2-(2-imidazolin-2-yl)propane] dihydrochloride. After reaching a conversion of 90%, N-vinyl formamide (NVF) as monomer (M₂) for forming block B is added in 20 mol% (of the ethylenically unsaturated monomers used for the polymer). The polymerization of block B is initiated with a further 0.02 mol of 2,2'-azobis[2-(2-imidazolin-2-yl)propane] dihydrochloride.

## Claims

1. A method for the preparation of a multi-block copolymer by reversible addition-fragmentation chain transfer (RAFT) polymerization of at least one ethylenically unsaturated monomer (M₁) selected from MAMs, and at least one ethylenically unsaturated monomer (M₂), selected from LAMs and MAMs other than (M₁), preferably LAMs, the method comprising the steps of:
I) providing at least one ethylenically unsaturated monomer (M₁) selected from MAMs and at least one ethylenically unsaturated monomer (M₂) selected from LAMs and MAMs other than (M₁), preferebly LAMs;
II) providing a chain transfer agent (CTA) having a structure of formula (I) 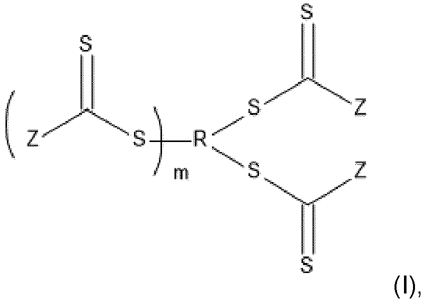 wherein
Z is an activating group, which is selected such that the CTA is suited for RAFT polymerization of both MAMs and LAMs;
R is an (m+2)-valent leaving group capable of forming a radical by homolytic cleavage of any of the R-S bonds, wherein the radical thus formed is reactive towards the C=C double bond of the at least one ethylenically unsaturated monomer (M₁) in terms of radical addition;
m is an integer equal to or greater than 0;
III) RAFT polymerization of the at least one ethylenically unsaturated monomer (M₁), in the presence of the chain transfer agent (CTA) and a radical initiator, and in the absence of the at least one ethylenically unsaturated monomer (M₂), until the at least one ethylenically unsaturated monomer (M₁) is at least partially consumed, preferably consumed in an amount of 10 to 99 mol-% of the total amount of ethylenically unsaturated monomer (M₁), thereby forming a polymer (P₁) having a structure of formula (I₁); 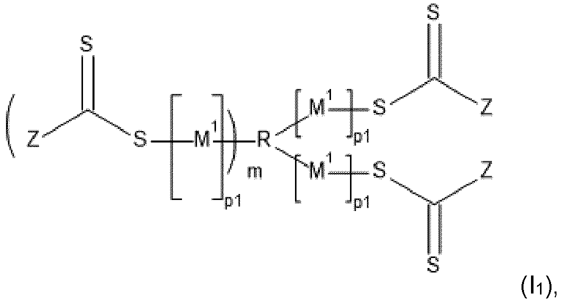 wherein
M¹ is the repeating unit obtained from radical RAFT polymerization of the at least one ethylenically unsaturated monomer (M₁);
each p1 independently is a number equal to or greater than 1, preferably from 1 to 500;
Z, R and m are the same as in formula (I), and wherein if two or more ethylenically unsaturated monomers (M₁) are provided in step I), the ethylenically unsaturated monomers (M₁) are polymerized together or separately, and in any order, and the repeating units M¹ derived from different ethylenically unsaturated monomers (M₁) may be arranged statistically or in blocks;
IV) RAFT polymerization of the at least one ethylenically unsaturated monomer (M₂) in the presence of the polymer (P₁) formed in step III), and optionally in the presence of more radical initiator, until the at least one ethylenically unsaturated monomer (M₂) is at least partially consumed, preferably consumed in an amount of 5 to 99 mol-% of the total amount of ethylenically unsaturated monomer (M₂), thereby forming a multi-block copolymer (P₂) having a structure of formula (I₂) 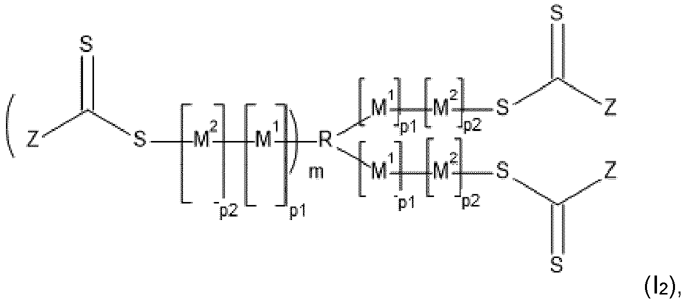 wherein
M² is the repeating unit obtained from radical RAFT polymerization of the at least one ethylenically unsaturated monomer (M₂);
each p2 independently is a number equal to or greater than 1, preferably from 1 to 500;
Z, R, M¹, m and each p1 are the same as in formula (I₁), and
wherein if two or more ethylenically unsaturated monomers (M₂) are provided in step I), MAMs are polymerized before LAMs and LAMs are polymerized together or separately, and in any order, and the repeating units M² derived from different ethylenically unsaturated monomers (M₂) may be arranged statistically or in blocks;
V) terminating the polymerization;
VI) optionally isolating the multi-block copolymer (P₂) obtained.

2. The method according to claim 1, wherein only one ethylenically unsaturated monomer (M₁) is provided in step I) and/or only one ethylenically unsaturated monomer (M₂) is provided in step I).

3. The method according to claim 1 or 2, wherein m is 0.

4. The method according to any one of claims 1 to 3, wherein R has a structure of formula (II) 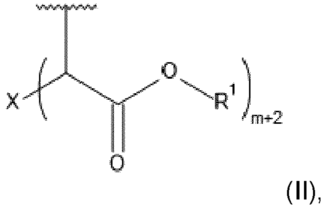 wherein
X is selected from the group consisting of linear, branched or cyclic, saturated or unsaturated, aliphatic hydrocarbon groups and aromatic hydrocarbon groups, preferably saturated aliphatic hydrocarbon groups;
R¹ is selected from the group consisting of hydrogen, linear, branched or cyclic, saturated or unsaturated, aliphatic hydrocarbon groups and aromatic hydrocarbon groups, preferably saturated aliphatic hydrocarbon groups; and
the waved line represents the attachment point of R to a sulfur atom in formula (I).

5. The method according to any one of claims 1 to 4, wherein R has a structure of formula (IIa) 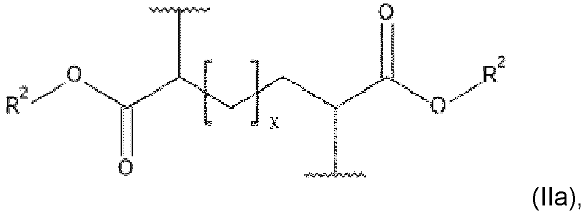 wherein
R² is selected from the group consisting of hydrogen, linear, branched or cyclic, saturated or unsaturated, aliphatic hydrocarbon groups and aromatic hydrocarbon groups, preferably saturated aliphatic hydrocarbon groups;
x is an integer from 1 to 6, preferably 1; and
the waved line represents the attachment point of R to a sulfur atom in formula (I).

6. The method according to any one of claims 1 to 5, wherein Z in formula (I) contains a heteroatom with a lone electron pair, preferably oxygen or nitrogen, and wherein Z is attached to the carbon atom of the thiocarbonyl group through the heteroatom with a lone pair.

7. The method according to any one of claims 1 to 6, wherein Z is selected from the group consisting of OR³, unsubstituted pyrazol-1-yl and substituted pyrazol-1-yl,
wherein R³ is selected from the group consisting of linear, branched or cyclic, saturated or unsaturated, aliphatic hydrocarbon groups and aromatic hydrocarbon groups; and wherein substituted pyrazol-1-yl is preferably dimethylpyrazol-1-yl, more preferably 3,5-dimethylpyrazol-1-yl.

8. The method according to any one of claims 1 to 7, wherein the CTA having a structure of formula (I) has a structure of either of formulae (Ia), (Ib) or (Ic)

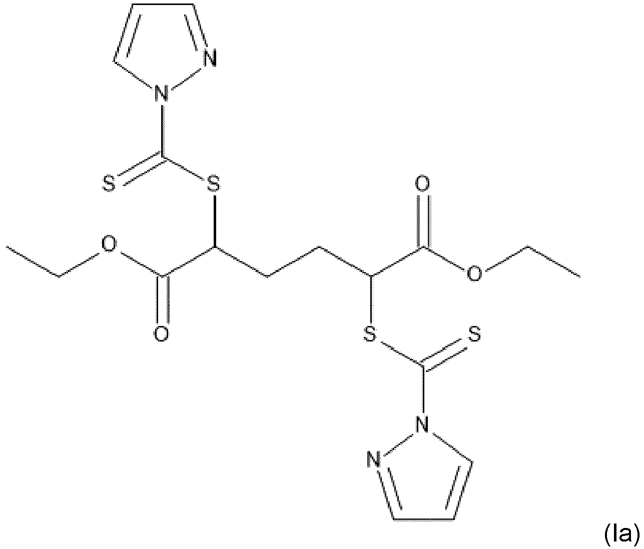

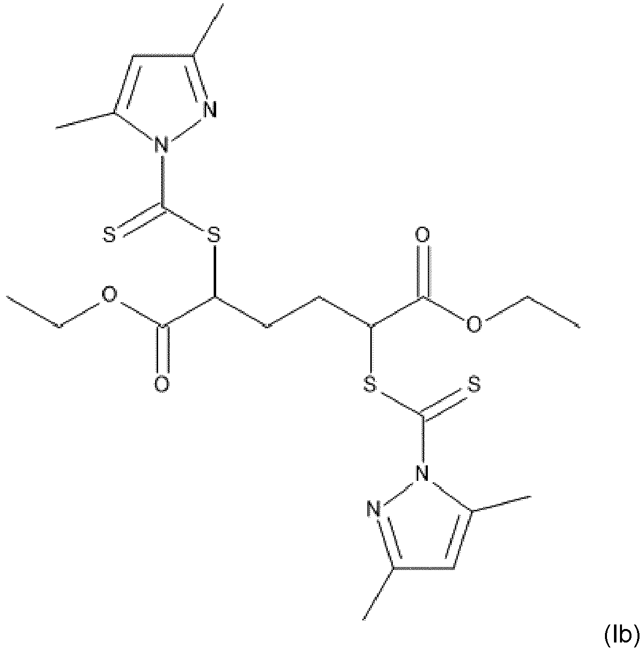

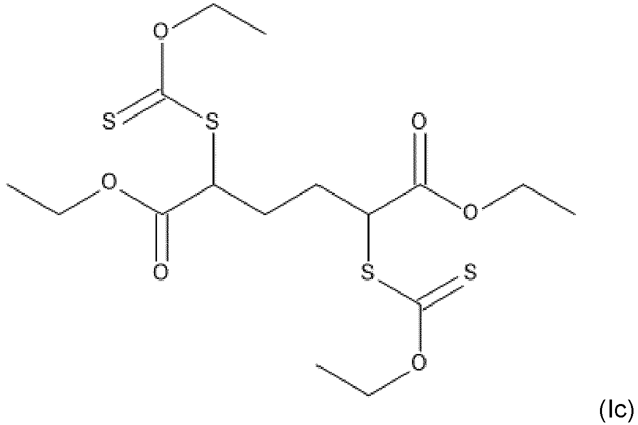

9. The method according to any one of claims 1 to 8, wherein in the at least one ethylenically unsaturated monomer (M₁) the C=C double bond reactive to radical addition is conjugated with another double bond or an aryl group, preferably with a C=O double bond, and in the at least one ethylenically unsaturated monomer (M₂) the C=C double bond reactive to radical addition is not conjugated with another double bond or an aryl group, and is preferably conjugated with a lone electron pair of a heteroatom.

10. The method according to any one of claims 1 to 9, wherein the at least one ethylenically unsaturated monomer (M₁) is selected from the group consisting of vinyl aromatics, C-vinyl heteroaromatics, alkyl acrylates, acrylonitriles, N,N-dialkyl acrylamides, alkyl methacrylates, N,N-dialkyl methacrylamides, acrylic acid and salts thereof, methacrylic acid and salts thereof, vinyl sulphones, vinylsulphoxides, vinyl phosphinates, vinyl phosphonates and combinations thereof, and/or the at least one ethylenically unsaturated monomer (M₂) is selected from the group consisting of vinyl esters, vinyl ethers, vinyl halides, N-vinyl amides, N-vinyl lactams, N-vinyl heteroaromatic compounds, vinyl silanes, vinyl phosphates, allyl monomers, diallyl monomers and combinations thereof.

11. A copolymer obtainable by RAFT polymerization of at least one ethylenically unsaturated monomer (M₁) as defined in any one of claims 1 to 10, and at least one ethylenically unsaturated monomer (M₂) as defined in any one of claims 1 to 10, in the presence of a chain transfer agent (CTA) as defined in any one of claims 1 to 10.

12. The copolymer according to claim 11, wherein the copolymer is a multi-block copolymer (P₂) having a structure of formula (I₂) as defined in any one of claims 1 to 10, wherein the -S-C(=S)-Z moiety is optionally replaced by a different end group.

13. The use of the multi-block copolymer of claim 12 as an emulsifying or dispersing agent, rheology or viscosity modifier in lubricating fluids, emulsion binder, detergent for laundry treatment, or for biological applications for drug delivery systems.

14. A chain transfer agent (CTA) having the structure of formula (I) as defined in any one of claims 1 to 10, with the proviso that R does not contain any moieties obtained from the reaction of a siloxane moiety with an isocyanate moiety.

15. The use of a compound having the structure of formula (I) as defined in any one of claims 1 to 10 or 14 as a chain transfer agent (CTA) in the preparation of a copolymer from at least one ethylenically unsaturated monomer (M₁) as defined in any one of claims 1 to 10, and at least one ethylenically unsaturated monomer (M₂) as defined in any one of claims 1 to 10 by radical RAFT polymerization.

16. The use according to claim 15, wherein the copolymer is a multi-block copolymer containing the structure element B-A-B, wherein each B individually represents a polymer block obtainable by RAFT polymerization of an ethylenically unsaturated monomer (M₂) as defined in any one of claims 1 to 10, and A represents a polymer block obtainable by RAFT polymerization of an ethylenically unsaturated monomer (M₁) as defined in any one of claims 1 to 10, and wherein A is the innermost polymer block of the multi-block copolymer.

17. A process for the preparation of a chain transfer agent (CTA) having the structure of formula (I) as defined in any one of claims 1 to 10 or 14, comprising the step of treating a compound having the structure of formula (III) with a compound having the structure of formula (IV) in a nucleophilic substitution reaction, 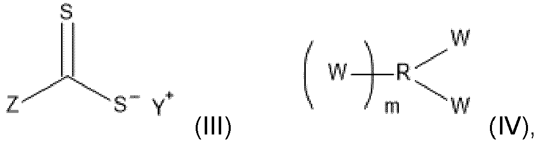 wherein
Z is defined as in any one of claims 1 to 10;
Y⁺ is a counterion, preferably an ammonium cation or a metal cation;
R and m are defined as in any one of claims 1 to 10; and
W is a nucleophilic substitution leaving group, preferably halide.
